# EUROPEAN PATENT APPLICATION

(11) **EP 3 342 838 A1**
(43) Date of publication of application: **04.07.2018**
(21) Application number: 16841647.7
(22) Date of filing: 25.08.2016
(51) Int. Cl.: C09J 123/26, B32B 15/085, C09J 11/06, C09J 125/04, H01M 2/02, H01M 10/04, H01M 10/0566, H01M 10/058

(54) **LAMINATION ADHESIVE, MULTILAYERED FILM, AND SECONDARY CELL USING SAME**

(30) Priority: 28.08.2015 JP 2015169103
(71) Applicant: DIC Corporation, Tokyo 174-8520 (JP)
(72) Inventor: NAKAMURA Hidemi, Tokyo 174-8520 (JP); MATSUO Takatoshi, Tokyo 174-8520 (JP); KOUYAMA Tatsuya, Tokyo 174-8520 (JP)
(74) Representative: TBK
(86) International application number: PCT/JP2016/074798
(87) International publication number: WO 2017/038615

(57) **Abstract**

There are provided a laminating adhesive including, as essential components, an olefin resin (A) having acid groups or acid anhydride groups, a curing agent (B), and a styrene resin (C), wherein a mixing ratio of the styrene resin (C) relative to 100 parts by mass of the olefin resin (A) is 0.01 to 1.5 parts by mass; a multilayer film including, as an essential film structure, a laminate obtained by laminating a non-stretched polyolefin film and a metal film to each other with the laminating adhesive; and a secondary battery produced by using the multilayer film.

## Description

### Technical Field

The present invention relates to a laminating adhesive for sealing an electrolyte used for a secondary battery, to a laminate made by using the laminating adhesive, and to a secondary battery.

### Background Art

Lithium-ion batteries have been widely used for telecommunication devices and home electrical appliances, particularly, as portable power sources, due to an advantage of high energy density. Recently, from the viewpoint of promoting low environmental stress and replacement of petroleum, lithium-ion batteries are further utilized as power sources for driving hybrid vehicles or electric vehicles, and furthermore, as power storage batteries in renewable energy systems, such as solar photovoltaic generation systems and wind power generation systems.

Regarding the external forms of such lithium-ion batteries, cylindrical or prismatic metal housings are widely used. However, these days, pouch-type lithium-ion batteries that include a laminate film as a housing material, the laminate film being a composite of a resin film and aluminum foil, and embossed lithium-ion batteries that include a container having a recess formed by deep drawing or bulging, the container being laminated with the laminate film, have been attracting attention because such batteries have lighter weight and higher forming flexibility than the batteries including a metal housing.

As an electrolyte serving as one of the elements constituting a lithium-ion battery, for example, a nonaqueous electrolyte solution, a gel polymer electrolyte, or an organic/inorganic solid electrolyte is used. Among such electrolytes, a nonaqueous electrolyte solution obtained by mixing a lithium ion salt of hexafluorophosphate (LiPF₆) with a carbonate-based organic solvent is mainly used due to high stability and high ionic conductance. However, when the nonaqueous electrolyte solution is contaminated with water, a reaction between the lithium ion salt of the hexafluorophosphate in the nonaqueous electrolyte solution and the water generates hydrofluoric acid. The hydrofluoric acid permeates a resin film constituting a battery housing material and, further, erodes an adhesive layer between the resin film and an aluminum foil, thereby causing degradation of adhesive strength.

In view of the foregoing, as an adhesive that is used for laminate films and has higher resistance to electrolyte solutions, for example, there is known an adhesive composition, which includes an amorphous polyolefin resin having carboxyl groups, a tackifier, and an aziridine-containing compound in such a manner that 20 to 90 parts by mass of the amorphous polyolefin resin having carboxyl groups and 10 to 80 parts by mass of the tackifier are contained relative to 100 parts by mass of the sum of the amorphous polyolefin resin having carboxyl groups and the tackifier (see Patent Literature 1). The adhesive composition includes a large amount of the tackifier to improve adhesion performance, and a high cohesive force can thereby be obtained. However, in contrast, the tackifier has low adhesion to olefin-based films, and as a result, a sufficiently high adhesion performance cannot be obtained.

### Citation List

### Patent Literature

PTL 1: Japanese Unexamined Patent Application Publication No. 2013-112697

### Summary of Invention

### Technical Problem

An object of the present invention is to provide a laminating adhesive having high adhesive strength after being immersed in an electrolyte solution, a composite film made by using the same, and a secondary battery that includes the composite film as a housing material and has high resistance to the electrolyte solution.

### Solution to Problem

The present inventors performed thorough investigations to achieve the above object and found that, by adding a small amount of a styrene resin to an adhesive that contains, as a base resin, a polyolefin having acid groups, pot life can be appropriately maintained without degradation of adhesive strength even if hydrofluoric acid is generated in an electrolyte solution, thereby realizing the present invention.

In other words, the present invention relates to a laminating adhesive including, as essential components, an olefin resin (A) having acid groups or acid anhydride groups, a curing agent (B), and a styrene resin (C), wherein a mixing ratio of the styrene resin (C) relative to 100 parts by mass of the olefin resin (A) is 0.01 to 1.5 parts by mass.

The present invention further relates to a multilayer film comprising, as an essential film structure, a laminate obtained by laminating a non-stretched polyolefin film and a metal film to each other by using the adhesive.

The present invention further relates to a secondary battery including, as essential components, a main body of a secondary battery, tab leads that are individually connected to a positive electrode or a negative electrode of the secondary battery, an electrolyte solution, and a housing material that seals the main body of the secondary battery and the electrolyte solution such that the tab leads protrude outside the secondary battery, wherein the housing material includes the multilayer film that is formed into a pouch-type packaging bag such that a non-stretched polyolefin film provides a heat-sealed portion.

The present invention further relates to a secondary battery including a main body of a secondary battery, electrode terminals, an electrolyte solution, and two multilayer films, wherein each of the two multilayer films is the multilayer film, the two multilayer films each having an embossed form formed by deep drawing or bulging in such a manner that non-stretched polyolefin films provide sealant surfaces, the sealant surfaces of the two multilayer films are laminated to each other, the main body of the secondary battery and the electrode terminals are disposed in an inner space formed by the lamination, the electrode terminals protrude outside the battery, and the inner space is filled with the electrolyte solution in a liquid-tight manner. Advantageous Effects of Invention

According to the present invention, a laminating adhesive having excellent adhesive strength after being immersed in an electrolyte solution, a composite film made by using the same, and a secondary battery that includes the composite film as a housing material and has high resistance to the electrolyte solution can be provided.

### Brief Description of Drawings

[Fig. 1] Fig. 1 is a cross-sectional view of a multilayer film according to the present invention.
[Fig. 2] Fig. 2 is a plan view of a pouch-type secondary battery produced by using the multilayer film according to the present invention.
[Fig. 3] Fig. 3 is a perspective view of a secondary battery produced by deep drawing or bulging of the multilayer film according to the present invention.

### Description of Embodiments

As described above, the laminating adhesive according to the present invention includes, as essential components, an olefin resin (A) having acid groups or acid anhydride groups, a curing agent (B), and a styrene resin (C). The mixing ratio of the styrene resin (C) relative to 100 parts by mass of the olefin resin (A) is 0.01 to 1.5 parts by mass. According to the present invention, by adding a relatively small amount of the styrene resin (C) to the olefin resin (A) having acid groups or acid anhydride groups, particularly, erosion of the interface between an adhesive layer and a metal layer caused by hydrofluoric acid generated by a reaction between a lithium ion salt of hexafluorophosphate and water can effectively be prevented, and degradation of the adhesive property under an environment of high temperature and high humidity can effectively be prevented.

### (Olefin Resin (A) Having Acid Groups or Acid Anhydride Groups)

Examples of the olefin resin (A) that has acid groups or acid anhydride groups and is used for the laminating adhesive according to the present invention include copolymers of an olefin-based monomer and an ethylenically unsaturated carboxylic acid or an ethylenically unsaturated carboxylic anhydride; and resins obtained by graft modifying a polyolefin with an ethylenically unsaturated carboxylic acid or an ethylenically unsaturated carboxylic anhydride.

Examples of the olefin-based monomer used for producing the former copolymers of an olefin-based monomer and an ethylenically unsaturated carboxylic acid or an ethylenically unsaturated carboxylic anhydride include olefins having 2 to 8 carbon atoms, such as ethylene, 1-propene, isobutylene, 1-butene, 4-methylpentene, hexene, and vinylcyclohexane. Among these, particularly, olefins having 3 to 8 carbon atoms are preferable due to excellent adhesive strength, and particularly, 1-propene and 1-butene are preferable due to excellent adhesive strength and high resistance to solvents.

As the ethylenically unsaturated carboxylic acid or the ethylenically unsaturated carboxylic anhydride used for copolymerization with an olefin-based monomer, next, as the ethylenically unsaturated carboxylic acid or the ethylenically unsaturated carboxylic anhydride that is used for copolymerization with the olefin monomers or that is used for graft modification of a polyolefin, acrylic acid, methacrylic acid, maleic acid, itaconic acid, citraconic acid, mesaconic acid, maleic anhydride, 4-methylcyclohex-4-ene-1,2-dicarboxylic anhydride, bicyclo[2.2.2]oct-5-ene-2,3-dicarboxylic anhydride, 1,2,3,4,5,8,9,10-octahydronaphthalene-2,3-dicarboxylic anhydride, 2-octa-1,3-diketospiro[4.4]non-7-ene, bicyclo[2.2.1]hept-5-ene-2,3-dicarboxylic anhydride, maleopimaric acid, tetrahydrophthalic anhydride, methyl-bicyclo[2.2.1]hept-5-ene-2,3-dicarboxylic anhydride, methyl-norbornene-5-ene-2,3-dicarboxylic anhydride, or norborn-5-ene-2,3-dicarboxylic anhydride may be used. Among these compounds, maleic anhydride is particularly preferable because maleic anhydride has a high reactivity with an olefin-based monomer and has a high reactivity as an anhydride after copolymerization, and when a copolymer is produced, the concentration of functional groups of the copolymer is high due to a low molecular weight of the compound. The above compounds may be used alone or in a combination of two or more.

For producing the copolymers, another compound having an ethylenically unsaturated group may be used in combination with the various above-described monomers. Examples of the compound include styrene, butadiene, and isoprene.

On the other hand, examples of the polyolefin used for graft modification include homopolymers and copolymers of olefins having 2 to 8 carbon atoms and copolymers of olefins having 2 to 8 carbon atoms and other monomers, specifically, polyethylene, such as high-density polyethylene (HDPE), low-density polyethylene (LDPE), and linear low-density polyethylene resins; polypropylene; polyisobutylene; poly(1-butene); poly(4-methylpentene); polyvinylcyclohexane; α-olefin copolymers, such as ethylene/propylene block copolymers, ethylene/propylene random copolymers, ethylene/butane-1 copolymers, ethylene/4-methyl-1-pentene copolymers, and ethylene/hexene copolymers; ethylene/vinyl acetate copolymers; ethylene/methyl methacrylate copolymers; ethylene/vinyl acetate/methyl methacrylate copolymers; and propylene/1-butene copolymers. Among these compounds, homopolymers of an olefin having 3 to 8 carbon atoms or copolymers of two or more olefins having 3 to 8 carbon atoms are preferable due to excellent adhesive strength, and particularly, a propylene homopolymer or a propylene/1-butene copolymer is preferable due to excellent adhesive strength and high resistance to solvents.

Next, examples of the ethylenically unsaturated carboxylic acid and the ethylenically unsaturated carboxylic anhydride that are used for graft modification of a polyolefin include acrylic acid, methacrylic acid, maleic acid, itaconic acid, citraconic acid, mesaconic acid, maleic anhydride, 4-methylcyclohex-4-ene-1,2-dicarboxylic anhydride, bicyclo[2.2.2]oct-5-ene-2,3-dicarboxylic anhydride, 1,2,3,4,5,8,9,10-octahydronaphthalene-2,3-dicarboxylic anhydride, 2-octa-1,3-diketospiro[4.4]non-7-ene, bicyclo[2.2.1]hept-5-ene-2,3-dicarboxylic anhydride, maleopimaric acid, tetrahydrophthalic anhydride, methyl-bicyclo[2.2.1]hept-5-ene-2,3-dicarboxylic anhydride, methyl-norbornene-5-ene-2,3-dicarboxylic anhydride, and norborn-5-ene-2,3-dicarboxylic anhydride. Among these compounds, maleic anhydride is preferable because the functional group particularly has a high reactivity after graft modification, and the concentration of the functional groups of the graft modified polyolefin is high. The above compounds may be used alone or in a combination of two or more.

Examples of the methods for reacting the ethylenically unsaturated carboxylic acid or the ethylenically unsaturated carboxylic anhydride with a polyolefin by graft modification include, specifically, a method in which the ethylenically unsaturated carboxylic acid or the ethylenically unsaturated carboxylic anhydride (graft monomer) is added to the polyolefin that is melted, and the mixture is subjected to a grafting reaction; a method in which the ethylenically unsaturated carboxylic acid or the ethylenically unsaturated carboxylic anhydride is added to a solution obtained by dissolving a polyolefin resin in a solvent, and the grafting reaction is performed; and a method in which, after mixing the ethylenically unsaturated carboxylic acid or the ethylenically unsaturated carboxylic anhydride with a polyolefin resin dissolved in an organic solvent, heating at a temperature higher than or equal to the softening temperature or the melting point of the polyolefin resin is performed and followed by performing radical polymerization and a hydrogen abstraction reaction simultaneously in a melting state.

In each of the methods, a grafting reaction is preferably performed in the presence of a radical polymerization initiator in order to graft-copolymerize the graft monomers efficiently. A grafting reaction is typically performed under a condition of 60°C to 350°C. Typically, the ratio of the radical polymerization initiator relative to 100 parts by weight of the unmodified polyolefin is in the range of 0.001 to 1 part by weight.

The radical polymerization initiator is preferably an organic peroxide. Examples thereof include benzoyl peroxide, dichlorobenzoyl peroxide, dicumyl peroxide, di-tert-butyl peroxide, 2,5-dimethyl-2,5-di(peroxide benzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate, and tert-butyl perdiethylacetate. An azo compound, such as azobisisobutyronitrile or dimethyl azoisobutyrate, may be used.

The radical polymerization initiator may be suitably selected in accordance with the process of a grafting reaction, however, dicumyl peroxide or a dialkyl peroxide, such as di-tert-butyl peroxide, 2,5-dimethyl-2,5-di(tert-butylperoxy)hexyne-3,2,5-dimethyl-2,5-di(tert-butylperoxy)hexane, or 1,4-bis(tert-butylperoxyisopropyl)benzene is preferably used.

The olefin resin (A) having acid groups or acid anhydride groups preferably has an acid value in a range of 1 to 200 mg KOH/g in view of higher adherence of a metal layer and excellent resistance to electrolytes.

According to the present invention, a resin obtained by graft modifying a polyolefin with an ethylenically unsaturated carboxylic acid or an ethylenically unsaturated carboxylic anhydride is preferable to a copolymer of an olefin-based monomer and an ethylenically unsaturated carboxylic acid or an ethylenically unsaturated carboxylic anhydride, due to higher adhesive strength.

As such an olefin resin (A) having acid groups or acid anhydride groups, a maleic anhydride modified polypropylene or a maleic anhydride modified propylene/1-butene copolymer is particularly preferable, due to excellent adhesive strength, particularly, under a high-temperature environment.

The fully described olefin resin (A) having acid groups or acid anhydride groups preferably has a melting point in a range of 65°C to 85°C due to excellent resistance to electrolyte solutions, and further, the crystallization peak temperature measured by DSC (Differential Scanning Calorimetry) is preferably 28°C or higher due to excellent resistance to electrolyte solutions.

### (Curing agent (B))

The curing agent (B) is a component to harden the adhesive by reacting with the olefin resin (A) having acid groups or acid anhydride groups to form cross-links with the olefin resin (A). Examples of the curing agent (B) include multifunctional isocyanate compounds, aziridine group-containing compounds, epoxy compounds, and melamine resins.

Examples of the multifunctional isocyanate compounds include diisocyanates, such as 2,4-tolylenediisocyanate, 2,6-tolylenediisocyanate, xylylene diisocyanate, diphenylmethane diisocyanate, isophorone diisocyanate, 1,5-naphthalene diisocyanate, hexamethylene diisocyanate, bis(4-isocyanatecyclohexyl)methane, and hydrogenated diphenylmethane diisocyanate; compounds derived from such diisocyanates, such as isocyanurates, adducts, biurets, uretdiones, allophanates, and prepolymers having isocyanate residues (a low polymer obtained from a diisocyanate and a polyol); and composites of the above compounds.

When the multifunctional isocyanate compound is used as the curing agent (B), the equivalent ratio [NCO/acid group] of the isocyanate groups to the acid groups (the equivalent of the acid anhydride groups is assumed to be 2) in the olefin resin (A) having acid groups or acid anhydride groups is preferably 0.05 to 0.6 from the viewpoint of hardenability and adhesive strength.

Examples of the aziridine group-containing compounds include N,N'-hexamethylene-1,6-bis(1-aziridinecarboxyamide), N,N'-diphenylmethane-4,4'-bis(1-aziridinecarboxyamide), trimethylolpropane-tri-p-aziridinylpropionate, N,N'-toluene-2,4-bis-(1-aziridinecarboxamide), triethylenemelamine, trimethylolpropane-tri-β-(2-methylaziridine)propionate, bisisophthaloyl-1-2-methylaziridine, tri-1-aziridinylphosphine oxide, and tris-1-2-methylaziridinephosphine oxide.

When the aziridine group-containing compound is used as the curing agent (B), the equivalent ratio [aziridine group/acid group] of the aziridine groups to the acid groups (the equivalent of the acid anhydride groups is assumed to be 2) in the olefin resin (A) having acid groups or acid anhydride groups is preferably 0.3 to 10 from the viewpoint of hardenability and adhesive strength.

Examples of the epoxy compounds include polyglycidyl ether-type epoxy resins of aliphatic polyols, such as ethylene glycol, propylene glycol, hexanediol, neopentyl glycol, trimethylolethane, trimethylolpropane, pentaerythritol, glycerine, diglycerine, sorbitol, spiroglycol, and hydrogenated bisphenol A; bisphenol-type epoxy resins, such as bisphenol A-type epoxy resins, bisphenol F-type epoxy resins, bisphenol S-type epoxy resins, and bisphenol AD-type epoxy resins; aromatic epoxy resins, such as novolac-type epoxy resins that are glycidyl ethers of phenol novolac resins or cresol novolac resins; polyglycidyl ethers of polyols that are ethylene oxide adducts or propylene oxide adducts of aromatic polyhydroxy compounds, examples of the aromatic polyhydroxy compounds including bisphenol A, bisphenol F, bisphenol S, and bisphenol AD; polyglycidyl ether-type epoxy resins of polyether polyols, examples of the polyether polyols including polyethylene glycol, polypropylene glycol, and polytetramethylene glycol; and alicyclic-type polyepoxy resins, such as bis(3,4-epoxycyclohexylmethyl)adipate and 3,4-epoxycyclohexylmethyl-3',4'-epoxycyclohexylcarboxylate.

Among the above epoxy compounds, epoxy compounds having an epoxy equivalent of 100 to 300 g/eq. are preferable because such epoxy compounds have high crosslinking density and higher adhesive strength while ensuring a longer pot life. Particularly, polyglycidyl ether-type epoxy resins of aliphatic polyols are preferable due to excellent adhesive strength.

When the epoxy compound is used as the curing agent (B), the equivalent ratio [epoxy group/acid group] of the epoxy groups to the acid groups (the equivalent of the acid anhydride groups is assumed to be 2) in the olefin resin (A) having acid groups or acid anhydride groups is preferably 0.1 to 10, more preferably 0.1 to 3, from the viewpoint of hardenability and adhesive strength. According to the present invention, the epoxy compound is preferably used in combination with a hardening accelerator.

Examples of the hardening accelerator include phosphorus compounds, tertiary amines, imidazole, organic acid metal salts, Lewis acids, and amine complex salts. Among these compounds, imidazole is preferable due to an excellent hardening accelerating effect.

Among such various curing agents (B), the epoxy compounds are preferable because the epoxy compounds have an excellent pot life and good adhesive strength. In other words, when a multifunctional isocyanate compound is used as the curing agent (B), the multifunctional isocyanate compound has high reactivity with the olefin resin (A) having acid groups or acid anhydride groups, the olefin resin (A) functioning as a base resin, and has excellent hardenability, however, the pot life Decreases, and gelation is likely to occur. In contrast, the epoxy compounds have excellent adhesive strength while ensuring a long pot life.

Next, examples of the styrene resin (C) used in the present invention include homopolymers of a styrene-based monomer, such as homopolymers of styrene and homopolymers of α-methylstyrene; copolymers of styrene and α-methylstyrene; copolymers of a styrene-based monomer, such as styrene or α-methylstyrene, and a polymerizable aliphatic monomer; and copolymers of a styrene-based monomer, such as styrene or α-methylstyrene, and a polymerizable aromatic monomer.

### (Styrene resin (C))

The styrene resin (C) preferably has a melting point in the range of 80°C to 140°C due to excellent resistance to electrolyte solutions. The styrene resin (C) preferably has a weight-average molecular weight in the range of 800 to 3000 because the wettability on a metal film improves and the effect of blocking the permeation of hydrofluoric acid increases. Here, the weight-average molecular weight is measured under the following conditions.

Measuring device; HLC-8220GPC manufactured by Tosoh Corporation
Column; TSK-GUARDCOLUMN SuperHZ-L manufactured by Tosoh Corporation + TSK-GEL SuperHZM-M × 4 manufactured by Tosoh Corporation
Detector; RI (differential refractometer)
Data processing; Multi-station GPC-8020 modelII manufactured by Tosoh Corporation
Measuring condition; Column temperature 40°C
   Solvent Tetrahydrofuran
   Flow rate 0.35 ml/min
Standard; Monodisperse polystyrene
Sample; Material (100 µl) obtained by filtrating a 0.2 mass% tetrahydrofuran solution in terms of resin solid content by using a microfilter.

As described above, the mixing amount of styrene resin (C) is 0.01 to 1.5 parts by mass relative to 100 parts by mass of the olefin resin (A). When the mixing amount is below 0.01 parts by mass, mixing of the styrene resin (C) does not exhibit the effect of blocking the permeation of hydrofluoric acid sufficiently. In contrast, when the mixing amount is above 1.5 parts by mass, adhesive strength decreases, and erosion of the interface between an adhesive layer and a metal layer caused by hydrofluoric acid cannot sufficiently be prevented.

The laminating adhesive according to the present invention can ensure fluidity and exhibit appropriate application properties in a case in which an organic solvent is further added in addition to the above-described components. Such an organic solvent is not particularly limited provided that the organic solvent can be removed by evaporation while heating is performed in a step of drying during an adhesive applying process. Examples of the organic solvent include, aromatic organic solvents such as toluene and xylene; aliphatic organic solvents, such as n-hexane and n-heptane; alicyclic organic solvents, such as cyclohexane and methylcyclohexane; ketone-based solvents, such as methyl ethyl ketone, methyl isobutyl ketone, and cyclohexanone; ester-based solvents, such as ethyl acetate and butyl acetate; alcohol-based solvents, such as ethanol, methanol, n-propanol, 2-propanol (isopropyl alcohol), butanol, and hexanol; ether-based solvents, such as diisopropyl ether, butyl cellosolve, tetrahydrofuran, dioxane, and butyl carbitol; glycol ether-based solvents, such as diethylene glycol monomethyl ether, triethylene glycol monomethyl ether, and propylene glycol monomethyl ether; and glycol ester-based solvents, such as ethylene glycol monomethyl ether acetate, propylene glycol monomethyl ether acetate, and diethylene glycol monoethyl ether acetate. These solvents may be used alone or in a combination of two or more.

However, the olefin resin (A) having acid groups or acid anhydride groups used in the present invention is a non-chlorine-based olefin resin and is typically poorly soluble in organic solvents. Thus, as an organic solvent in which the olefin resin (A) having acid groups or acid anhydride groups dissolves well, a mixed solvent of an alicyclic organic solvent, an ester-based solvent, and alcohol-based solvent is preferably used.

Preferably, the alicyclic organic solvent is, for example, cyclohexane or methylcyclohexane; the ester-based solvent is, for example, ethyl acetate or butyl acetate; and the alcohol-based solvent is, for example, ethanol, methanol, n-propanol, 2-propanol (isopropyl alcohol), butanol, or hexanol, and particularly, butanol or isopropyl alcohol is preferable. The mixing ratio is not particularly limited, however, in a case in which the alicyclic organic solvent has a content of 50% relative to the total amount of the mixed solvent, the solubility improves, and thus the mixed solvent is preferable.

For example, a combination of methylcyclohexane/butyl acetate/butanol or a combination of methylcyclohexane, ethyl acetate, and isopropyl alcohol is preferable.

Although, typically, other styrene-based resins serving as thermoplastic resins hardly dissolve in the mixed solvent, the styrene resin (C) used in the present invention dissolves well in the mixed solvent in spite of being a thermoplastic resin. Thus, when the mixed solvent is used, the application properties of the adhesive and the wettability of the adhesive on a metal film improve, and the effect of blocking the permeation of hydrofluoric acid thereby further improves.

The amount of the organic solvent is preferably such that the ratio of the olefin resin (A) having acid groups or acid anhydride groups relative to the total mass of the olefin resin (A) having acid groups or acid anhydride groups and the organic solvent is 10% to 30% by mass because application properties and the wettability on a metal film are excellent.

The laminating adhesive according to the present invention may include a tackifier, a plasticizer, a thermoplastic elastomer, a phosphate compound, a silane coupling agent, or a reactive elastomer, if necessary. The content of such an additive can appropriately be changed provided that the function of the adhesive according to the present invention is not degraded.

Examples of the tackifier that may be used here include polyterpene resins, rosin-based resins, aliphatic petroleum resins, alicyclic petroleum resins, copolymerized petroleum resins, and hydrogenated petroleum resins.

Examples of the plasticizer include polyisoprene, polybutene, and process oil. Examples of the thermoplastic elastomer include styrene/butadiene copolymers (SBS), hydrogenated styrene/butadiene copolymers (SEBS), SBBS, hydrogenated styrene/isoprene copolymers (SEPS), styrene block copolymers (TPS), and olefin-based elastomers (TPO). The reactive elastomer may be obtained by acid-modifying any of such elastomers. Examples of the silane coupling agent include amino silanes, mercapto silanes, vinyl silanes, epoxy silanes, methacryl silanes, ureido silanes, alkyl silanes, styryl silane, sulfide silanes, and isocyanate silane.

Mixing the above fully described components provides the laminating adhesive according to the present invention. In this case, each component can be mixed with each other simultaneously to prepare the adhesive. However, the laminating adhesive is preferably a two-component adhesive made by mixing, when the adhesive is used, the curing agent (B) with a base resin premixture in which components other than the curing agent (B) have been mixed in advance. This is because the stability and the usability of the laminating adhesive are excellent.

### (Multilayer Film)

Laminating a non-stretched polyolefin film and a metal film to each other by using the laminating adhesive according to the present invention provides a multilayer film according to the present invention.

Examples of the metal film used here include metal foil, metal foil obtained by laminating various films to each other, and metal vapor-deposited films. Examples of the materials for the metal film include aluminum, copper, nickel, and stainless steel. Such metal films may be subjected to a surface treatment, such as sand-blasting, polishing, degreasing, etching, a surface treatment of being immersed in or sprayed with an anticorrosive, chemical conversion with trivalent chromium, chemical conversion with phosphate, chemical conversion with sulfide, anodic oxidation coating, or fluorine resin coating. Among these treatments, chemical conversion with trivalent chromium is preferable due to providing excellent adherence maintaining capacity (resistance to environmental degradation) and an excellent anticorrosion property. From the viewpoint of corrosion prevention, the metal film preferably has a thickness of 10 to 100 µm.

On the other hand, examples of the non-stretched polyolefin film include a non-stretched polyethylene film and a non-stretched polypropylene film. The non-stretched polyolefin film preferably has a thickness in the range of 10 to 100 µm because such a film enables a packaging bag to be formed of a thinner film and to have excellent strength.

In a specific method for producing the multilayer film, the viscosity of the laminating adhesive according to the present invention is appropriately adjusted by using the organic solvent; the laminating adhesive is applied to the metal film by a known applying method, such as roll coating, gravure coating, or bar coating; and drying is performed to form an adhesive layer. In this case, the laminating adhesive composition according to the present invention preferably has a dry application weight in the range of 0.5 to 20.0 g/m². A dry application weight below 0.5 g/m² is likely to cause deterioration of continuous and uniform application, causing degradation of usability. In contrast, a dry application weight above 20.0 g/m² causes deterioration of ease of removing solvent, and the remaining solvent is thereby likely to cause some problems.

Next, on the metal film surface to which the laminating adhesive according to the present invention is applied, the non-stretched polyolefin film is laminated by dry lamination (dry laminating) to provide the target multilayer film according to the present invention. The dry lamination is preferably performed under the condition in which the temperature of a laminating roll is 25 to 120°C and the pressure is 3 to 300 kg/cm².

After the dry lamination, aging is preferably performed from the viewpoint that the adhesive strength can be improved. In this case, the aging condition is preferably such that the temperature is 25 to 100°C and the time is 12 to 240 hours.

From the viewpoint of the shape-retaining property, the multilayer film according to the present invention includes a base film laminated on a surface of the metal film with an adhesive layer disposed therebetween, the surface being opposite to the surface where the lamination is performed by using the adhesive. In this case, an adhesive contained in the adhesive layer may be any typically known laminating adhesive, however, from the viewpoint of adhesive strength, the laminating adhesive according to the present invention is preferable.

The base film may be a biaxially stretched polyester film or a biaxially stretched polyamide film. This base film is located at an outermost layer when the multilayer film is used as a housing material of a secondary battery. Typically, the base film has a thickness in the range of 15 to 30 µm.

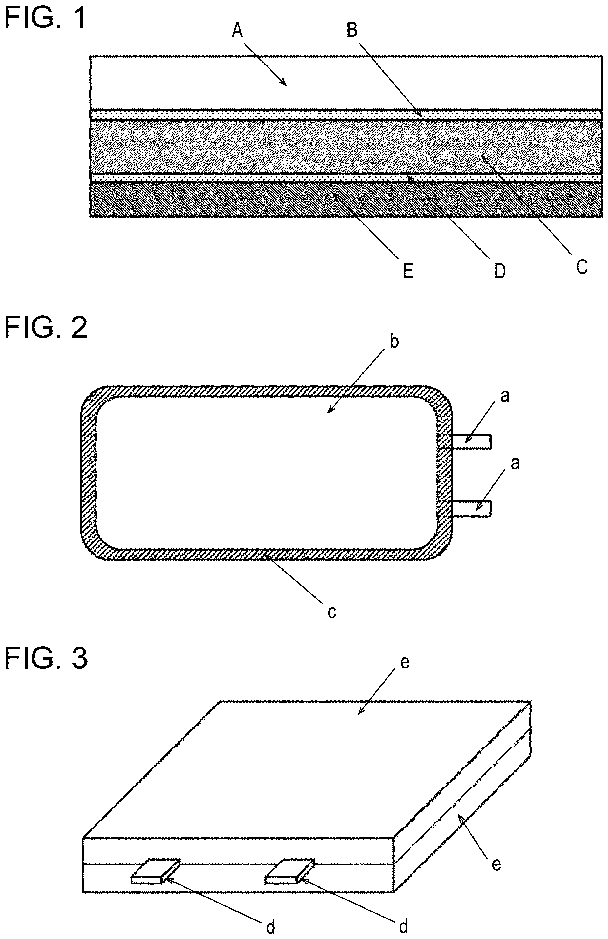

Fig. 1 is a cross-sectional view of the multilayer film according to the present invention obtained as described above. A metal film C is laminated with a non-stretched polyolefin film A with an adhesive according to the present invention B interposed therebetween, and further, laminated with a base film E with an adhesive layer D (desirably, an adhesive according to the present invention) disposed therebetween. The multilayer film is formed into a housing material of a secondary battery such that the non-stretched polyolefin film A is in contact with an electrolyte solution. Finally, opposing ends of the non-stretched polyolefin film A are heat-sealed with each other to form the film into a packaging material.

### (Secondary Battery)

When a secondary battery is produced by using the multilayer film according to the present invention, the form of such a secondary battery may be a secondary battery obtained by forming the multilayer film into a pouch or a secondary battery obtained by forming the multilayer film into a housing material by deep drawing or bulging.

The pouch-type secondary battery specifically includes, as essential components, the main body of the secondary battery, tab leads that serve as terminals and are independently connected to a positive electrode or a negative electrode of the secondary battery, an electrolyte solution, and a housing material that seals the main body of the secondary battery and the electrolyte solution such that the tab leads protrude outside the secondary battery. The housing material is formed into a pouch-type packaging bag by laminating the multilayer films according to the present invention to each other so as to oppose non-stretched polyolefin film surfaces to each other to form a heat-sealed portion and by heat-sealing the heat-sealed portion; or by folding the multilayer film so as to oppose the opposite portions of the non-stretched polyolefin film surface to each other to form a heat-sealed portion and by heat-sealing the heat-sealed portion. Specifically, examples of the pouch-type packaging bag include three-side seal bags, four-side seal bags, and pillow-type bags. For example, a four-side seal bag, as illustrated in the plan view of Fig. 2, has a structure in which a multilayer film b is formed into a packaging bag so as to include the main body of a battery while each of tab leads a connected to a positive electrode or a negative electrode of the main body of the secondary battery protrudes outside, and the four-side seal bag is sealed by heat-sealing four sides of a heat-sealed portion c while being filled with an electrolyte solution in a liquid-tight manner.

In contrast, an example of a secondary battery produced by using the multilayer films that are subjected to deep drawing or bulging specifically has the following structure. The multilayer film according to the present invention is formed into an embossed formed body by deep drawing or bulging in such a manner that a non-stretched polyolefin film includes a sealant surface. The two formed bodies (sealant surfaces of the multilayer films) are laminated to each other. A main body of the secondary battery and electrode terminals are disposed in an inner space formed by the lamination. The electrode terminals protrude outside the battery. An electrolyte solution is contained in a liquid-tight manner in the inner space. Specifically, as illustrated in the perspective view of Fig. 3, the secondary battery has a structure in which embossed battery container parts e are laminated to each other so as to include the secondary battery therebetween, to be filled with the electrolyte solution and to include electrode terminals d. A flange formed by heat-sealing the sealant surfaces of the embossed formed bodies may be removed by cutting as illustrated in Fig. 3.

The secondary battery is desirably used as a lithium-ion battery, and in such a case, the electrolyte solution includes an aprotic solvent, such as propylene carbonate, ethylene carbonate, dimethyl carbonate, diethyl carbonate, or ethyl methyl carbonate, and an electrolyte. Examples of the lithium salt serving as the electrolyte include salts, such as LiPF₆ and LiBF₄.

As described above, a hydrolysis reaction between such a lithium salt and water generates hydrofluoric acid, and corrosion of the metal surface and degradation of laminating strength between layers of the multilayer film are thereby caused. However, according to the present invention, the hydrofluoric acid can effectively be blocked from contacting the metal surface.

### Examples

Hereinafter, the present invention is specifically described by using examples. The term "parts" refers to parts by mass.

The weight-average molecular weight (Mw) of styrene resins used in Examples and Comparative Examples is measured under the conditions described below.

Measuring device; HLC-8220 GPC manufactured by Tosoh Corporation
Column; TSK-GUARDCOLUMN SuperHZ-L manufactured by Tosoh Corporation + TSK-GEL SuperHZM-M×4 manufactured by Tosoh Corporation
Detector; RI (differential refractometer)
Data processing; Multi-station GPC-8020 modelII manufactured by Tosoh Corporation
Measuring condition; Column temperature 40°C
   Solvent Tetrahydrofuran
   Flow rate 0.35 ml/min
Standard; Monodisperse polystyrene
Sample; Material (100 µl) obtained by filtrating a 0.2 mass% tetrahydrofuran solution in terms of resin solid content by using a microfilter.

### (Examples 1 to 4 and Comparative Examples 1 to 6)

As a base resin, 100 parts by mass of a resin solution (non-volatile content 20% by mass, "HARDLEN NS-2002" manufactured by TOYOBO Co., Ltd) obtained by dissolving 20 parts by mass of an acid group-containing olefin resin obtained by graft-modifying a copolymer having 1-propene and 1-butene with maleic anhydride, the olefin resin serving as the olefin resin (A) having acid groups or acid anhydride groups, in 80 parts by mass of a mixed solvent (methylcyclohexane/butyl acetate/butanol = 72/7/1 (mass ratio)) was used, mixed with the components other than the epoxy compounds in Table 1 or 2, and stirred well to provide a premixture of the base resin. Then, after mixing the epoxy compounds in Table 1 or 2 in an amount exhibited in Table 1 or 2 with the premixture to prepare an adhesive, the adhesive was applied to an aluminum foil having untreated surfaces (aluminum foil "1N30H" manufactured by Toyo Aluminium K.K., film thickness: 30 µm) by using a bar coater in a coating amount of 5 g/m² (dry) and was dried at 80°C for 1 minute. Then the aluminum foil was laminated to a non-stretched polyolefin film ("ZK-93KM" manufactured by Toray Advanced Film Co., Ltd., film thickness: 70 µm) at 100°C to provide a laminate. After performing aging at 60°C for five days, initial adhesive strength was measured.

### (Example 5)

Other than a base resin that was 100 parts by mass of a resin solution (non-volatile content 20% by mass) obtained by dissolving 20 parts by mass of acid group-containing olefin resin (GMP7550E) obtained by graft-modifying a copolymer having 1-propene and 1-butene with maleic acid, the olefin resin serving as the olefin resin (A) having acid groups or acid anhydride groups, in 80 parts by mass of a mixed solvent (methylcyclohexane/ethyl acetate/isopropyl alcohol = 72/7/1), an adhesive was prepared in the same manner as in Example 4, and a laminate; was made by using the adhesive.

Adhesion performance and resistance to an electrolyte solution of the laminates in Examples and Comparative Examples were measured, and the results are shown in Table 1. Each performance test is performed under conditions described below.

### (Measurement of Initial Adhesive Strength)

The coated product was cut so as to have a width of 15 mm, and 180° peel strength was measured by using TENSILON (manufactured by A&D Company, Limited).

### (Resistance to Electrolyte solution)

The laminate was immersed in an electrolyte solution "ethylene carbonate:ethyl methyl carbonate:dimethyl carbonate = 1:1:1 (wt%) + LiPF₆: 1 mol + vinylene carbonate: 1% by mass" at 85°C for seven days, and evaluation was performed as described below on the basis of the retention ratio obtained by using adhesive strength before and after the immersion.
Good: 80% or more
Fair: 60% or more and less than 80%
Poor: less than 60%

### (Pot Life)

According to the compositions in Tables 1 and 2, a base resin, a curing agent, and a solvent were mixed, stirred well, and defoamed. Then, the viscosity was measured by using a B-type viscometer. The lid of a sample bottle was tightly closed, and the sample bottle was placed into a constant-temperature chamber at 40°C, and the viscosity was measured after 2 hours, 4 hours, and 6 hours. A change in the viscosity was evaluated on the basis of the criteria described below.
Good: viscosity increase rate is less than 30% relative to an initial value
Fair: viscosity increase rate is 30% or more and less than 50% relative to an initial value
Poor: viscosity increase rate is 50% or more relative to an initial value

### (Hot Strength Test)

The coated product was cut so as to have a width of 15 mm, and peel strength was measured in a constant-temperature chamber at 80°C by using TENSILON (manufactured by A&D Company, Limited).

**[Table 1]**

| Table 1 | | | Example 1 | Example 2 | Example 3 | Example 4 | Example 5 |
|---|---|---|---|---|---|---|---|
| Composition | Olefin resin (A) having acid anhydride groups | HARDLEN NS-2002 | 100 | 100 | 100 | 100 | |
| | | GMP7550E | | | | | 20 |
| | Curing accelerator | CUREZOL 2E4MZ | 0.01 | | 0.01 | | |
| | | Triphenylphosphine | | 0.01 | | 0.01 | 0.01 |
| | Styrene resin (C) | FTR6100 | 0.2 | | | | |
| | | FTR2140 | | 0.1 | | | |
| | | FMR0150 | | | 0.1 | | |
| | | FTR8120 | | | | 0.2 | 0.2 |
| | Curing agent (B) (Epoxy compound) | Denacol EX-321 | 0.3 | 0.4 | 0.5 | 0.3 | 0.3 |
| | | EPICLON 860 | 0.2 | | | 0.2 | 0.2 |
| Amount of styrene resin (parts by mass) relative to 100 parts by mass of olefin resin having acid anhydride groups (solid content) | | | 1.0 | 0.5 | 0.5 | 1.0 | 1.0 |
| Evaluation | Initial adhesive strength (180° N/15 mm) | | 14.1 | 15.3 | 15.5 | 16 | 12.7 |
| | Resistance to electrolyte solution | | Good | Good | Good | Good | Good |
| | Hot Strength at 80°C | | 5.1 | 5.8 | 6.5 | 6.1 | 3.8 |
| | Pot life | | Good | Good | Good | Good | Good |

**[Table 2]**

| Table 2 | | | Comparative Example 1 | Comparative Example 2 | Comparative Example 3 | Comparative Example 4 | Comparative Example 5 | Comparative Example 6 |
|---|---|---|---|---|---|---|---|---|
| Composition | Olefin resin (A) having acid anhydride groups | HARDLEN NS-2002 | 100 | 100 | 100 | 100 | 100 | 100 |
| | Curing accelerator | CUREZOL 2E4MZ | 0.01 | | 0.01 | | | |
| | | Triphenylphosphine | | 0.01 | | 0.01 | 0.01 | 0.01 |
| | Styrene resin (C) | FTR6100 FTR8120 | | | | | 2 | 5 |
| | Curing agent (B) (Epoxy compound) | Denacol EX-321 | 0.2 | 0.3 | 0.5 | 0.5 | 0.4 | 0.4 |
| | | EPICLON 860 | 0.2 | 0.1 | | | | |
| Amount of styrene resin (parts by mass) relative to 100 parts by mass of olefin resin having acid anhydride groups (solid content) | | | - | - | - | - | 10 | 20 |
| Evaluation | Initial adhesive strength (180° N/15 mm) | | 15.6 | 16.2 | 14 | 14.8 | 10.2 | 8.3 |
| | Resistance to electrolyte solution | | Poor | Poor | Poor | Poor | Good | Good |
| | Pot life | | Good | Good | Good | Good | Good | Good |

HARDLEN NS-2002: resin solution (non-volatile content 20% by mass) obtained by dissolving an acid group-containing olefin resin obtained by graft-modifying a copolymer having 1-propene and 1-butene with maleic anhydride in a mixed solvent (methylcyclohexane/butyl acetate/butanol = 72/7/1 (mass ratio))
GMP7550E: acid group-containing olefin resin (non-volatile content 100% by mass) obtained by graft-modifying a copolymer having 1-propene and 1-butene with maleic acid
CUREZOL 2E4MZ: imidazole ("CUREZOL 2E4MZ" manufactured by SHIKOKU CHEMICALS CORPORATION, non-volatile content 100% by mass)
Denacol EX-321: epoxy resin (trimethylolpropane polyglycidyl ether, "Denacol EX-321" manufactured by Nagase ChemteX Corporation, non-volatile content 100% by mass)
FTR6100: copolymer of a styrene-based monomer and a polymerizable aliphatic monomer (styrene-based resin "FTR6100" manufactured by Mitsui Chemicals, Inc., weight-average molecular weight 1100, non-volatile content 100% by mass)
FTR2140: copolymer of styrene and α-methylstyrene ("FTR2140" manufactured by Mitsui Chemicals, Inc., weight-average molecular weight 3200, non-volatile content 100% by mass)
FMR0150: copolymer of a styrene-based monomer and a polymerizable aromatic monomer ("FMR0150" manufactured by Mitsui Chemicals, Inc., weight-average molecular weight 2000, non-volatile content 100% by mass)
FTR8120: homopolymer of styrene-based monomer ("FTR8120" manufactured by Mitsui Chemicals, Inc., weight-average molecular weight 1500, non-volatile content 100% by mass)
EPICLON 860: bisphenol A-type epoxy resin ("EPICLON 860" manufactured by DIC Corporation, epoxy equivalent 240 g/eq., non-volatile content 100% by mass)

According to the results, the laminates in Examples 1 to 5 each had high initial adhesive strength and high resistance to the electrolyte solution. The laminates in Comparative Examples 1 to 4 did not contain a styrene resin and had poor resistance to the electrolyte solution. The laminates in Comparative Examples 5 and 6 containing more than 1.5 parts by mass of a styrene resin had poor initial adhesive strength.

### Reference Signs List

A: non-stretched polyolefin film
B: laminating adhesive according to the present invention
C: metal film
D: adhesive layer
E: base film
a: tab lead
b: multilayer film
c: heat-sealed portion
d: electrode terminal
e: formed body

## Claims

1. A laminating adhesive comprising, as essential components, an olefin resin (A) having acid groups or acid anhydride groups, a curing agent (B), and a styrene resin (C), wherein a mixing ratio of the styrene resin (C) relative to 100 parts by mass of the olefin resin (A) is 0.01 to 1.5 parts by mass.

2. The laminating adhesive according to Claim 1, wherein the styrene resin (C) has a melting point in a range of 80°C to 140°C.

3. The laminating adhesive according to Claim 1 or 2, wherein the styrene-based resin (C) has a weight-average molecular weight in a range of 800 to 3000.

4. The laminating adhesive according to any one of Claims 1 to 3, wherein the styrene-based resin (C) is a homopolymer of a styrene-based monomer, a copolymer of styrene and α-methylstyrene, a copolymer of a styrene-based monomer and a polymerizable aliphatic monomer, or a copolymer of a styrene-based monomer and a polymerizable aromatic monomer.

5. The laminating adhesive according to any one of Claims 1 to 4, wherein the curing agent (B) is an epoxy compound.

6. The laminating adhesive according to any one of Claims 1 to 5, wherein the olefin resin (A) having acid groups or acid anhydride groups is obtained by graft-modifying, with an ethylenically unsaturated carboxylic acid or an ethylenically unsaturated carboxylic anhydride, an olefin homopolymer having 3 to 8 carbon atoms or a copolymer of two or more olefins having 3 to 8 carbon atoms.

7. The laminating adhesive according to any one of Claims 1 to 6 comprising a mixed solvent of an alicyclic organic solvent, an ester-based solvent, and an alcohol-based solvent.

8. A multilayer film comprising, as an essential film structure, a laminate obtained by laminating a non-stretched polyolefin film and a metal film to each other by using the adhesive according to any one of Claims 1 to 7.

9. The multilayer film according to Claim 8, wherein the multilayer film includes a base film laminated on a surface of the metal film with an adhesive layer disposed therebetween, the surface being opposite to the surface where lamination is performed by using the adhesive.

10. The multilayer film according to Claim 9, wherein the base film is a biaxially stretched polyester film or a biaxially stretched polyamide film.

11. A secondary battery comprising, as essential components, a main body of a secondary battery, tab leads that are individually connected to a positive electrode or a negative electrode of the secondary battery, an electrolyte solution, and a housing material that seals the main body of the secondary battery and the electrolyte solution such that the tab leads protrude outside the secondary battery,
wherein the housing material includes the multilayer film according to any one of Claims 8 to 10 that is formed into a pouch-type packaging bag such that a non-stretched polyolefin film provides a heat-sealed portion.

12. A secondary battery comprising a main body of a secondary battery, electrode terminals, an electrolyte solution, and two multilayer films, each of the two multilayer films being the multilayer film according to any one of Claims 8 to 10, wherein the two multilayer films each have an embossed form formed by deep drawing or bulging in such a manner that non-stretched polyolefin films provide sealant surfaces, the sealant surfaces of the two multilayer films are laminated to each other to form an inner space, the main body of the secondary battery and the electrode terminals are disposed in the inner space, the electrode terminals protrude outside the battery, and the inner space is filled with the electrolyte solution in a liquid-tight manner.
